# EUROPEAN PATENT APPLICATION

(11) **EP 2 860 465 A2**
(43) Date of publication of application: **15.04.2015**
(21) Application number: 14184221.1
(22) Date of filing: 10.09.2014
(51) Int. Cl.: F24F 11/00, G05B 15/02, G08B 27/00

(54) **Control of ventilation equipment**

(30) Priority: 10.09.2013 FI 20135909
(71) Applicant: Zun Oy, 90401 Oulu (FI)
(72) Inventor: Tiihonen, Anu, 90401 Oulu (FI)
(74) Representative: Kolster Oy Ab

(57) **Abstract**

A ventilation control system (302) controls ventilation systems in several buildings (306, 308) in such a manner that the ventilation control system (302) transmits a command to switch off the ventilation system in predetermined dangerous situations, and receives a feedback from the ventilation system of at least one building (306, 308) in response to the transmitted command to switch off the ventilation system.

## Description

### Field

The invention relates to the control of ventilation equipment.

### Background

Modern buildings usually have forced ventilation, because the aim is to keep the quality of the indoor air in the building as good as possible. However, the quality of the indoor air may worsen quite rapidly and even become dangerously poor, if the quality of outdoor air becomes poorer quickly. Dangerous gases and volatile liquids are processed in different plants even in large quantities, and dangerous substances are transported on trains and tank lorries close to buildings with people and animals. An accident or a terrorist attack is possible in such situations. During different fire situations, dangerous combustion gas particles may be released into the air. Thus, dangerous gas released into the outdoor air may end up indoors in the breathing air of people and animals with serious consequences.

When the quality of the outdoor air is poor due to dangerous gases and/or particles, forced ventilation may be set to its lowest possible state, in which the air change rate is at its minimum, to prevent the quality of indoor air from worsening. In addition, the air going into the building may be filtered, but filtering is not sufficiently effective in an actual dangerous situation to remove enough of the dangerous substances that have entered the room air. Forced ventilation has not been made to be totally stopped from a normal user interface. A person in the building usually has to switch off electricity from the ventilation machine by switching off electric supply from the switch, but said switch is often behind a locked door with the key in the possession of only one or just a few persons, so it is not possible for everybody to reach the switch of the electric supply to shut down ventilation. In an emergency, people from the rescue department have to enter each building separately to make sure that at least attempts are made to shut down ventilation in the building, and this takes time and is dangerous. A problem with the prior art is also that there is no confirmed information rapidly available on what the state of ventilation is in each building.

Therefore, there is a need to develop ventilation systems.

### Brief description

It is an object of the invention to provide an improved control system for ventilation. This is achieved with the control system according to claim 1.

The invention is further related to a control method according to claim 10.

Preferred embodiments of the invention are disclosed in the dependent claims. The preferred embodiments enhance the advantages of the basic invention.

With the solution of the invention, it is possible to safely ensure the shutting down of ventilation and to monitor it.

### List of figures

The invention will now be described in greater detail in connection with preferred embodiments and with reference to the accompanying drawings, in which
Figure 1 shows an example of controlling ventilation systems,
Figure 2A shows an example of a processor and memory of a controller in a ventilation control system,
Figure 2B shows an example of a processor and memory of a controller in a ventilation system,
Figure 3A shows an example of a map before the ventilation machines in different buildings are shut down,
Figure 3B shows an example of the map after the ventilation machines are shut down, and
Figure 4 is a flow chart of the method.

### Description of embodiments

The following embodiments are presented by way of example. Even though the description may refer to "a", "one", or "some" embodiment at different points, this does not necessarily mean that each such reference refers to the same embodiment or that the feature only applies to one embodiment. Individual features of different embodiments may also be combined to make other embodiments possible.

The present remotely controlled ventilation system consists of switches installed in buildings and controllable through a radio system, for example, and a ventilation control system with its control software.

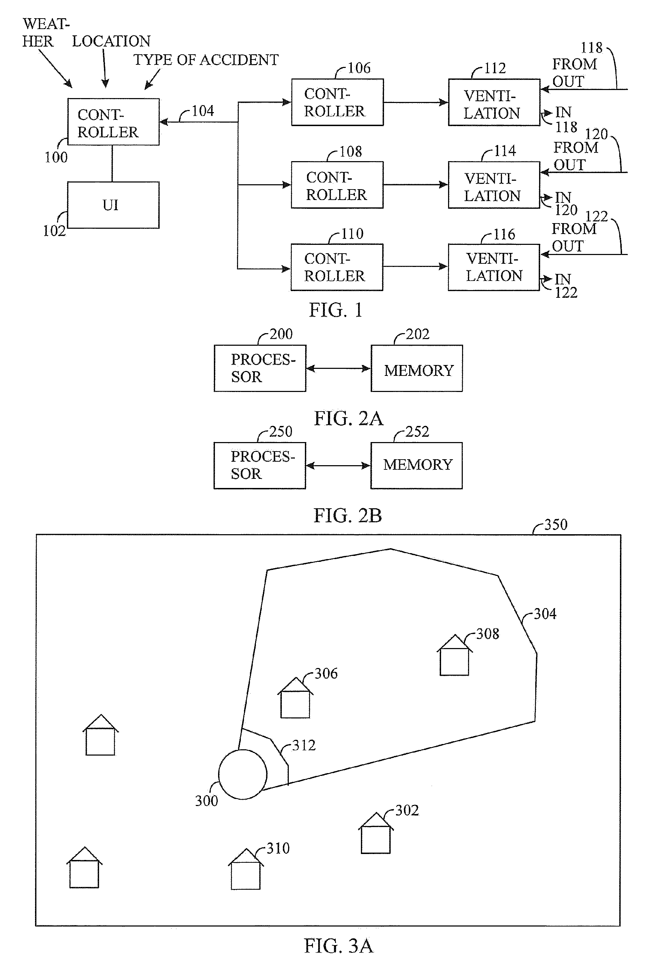

Let us first examine in more detail the ventilation control system by using Figure 1. The ventilation control system comprises a controller 100 and a user interface part 102 functionally connected thereto. The controller 100 of the ventilation control system is connected through a channel 104 to one or more ventilation controllers 106 to 110. At least one of the ventilation controllers 106 to 110 is in a different building than the controller 100. The channel 104 may be a data network and/or radio channel, for instance. The data network may be the Internet, for instance. The radio channel, in turn, may be a radio channel in a radio system. The radio system, in turn, may be based on the following technologies, for example: GSM (Global System for Mobile), UMTS (Universal Mobile Telecommunications System), UTRAN (UMTS Radio Access Network), LTE® (Long Term Evolution), LTE-A® (LTE Advanced), WLAN (Wireless Local Area Network that is based on IEEE 802.11 standard) WiMAX (Worldwide Interoperability for Microwave Access), Bluetooth®, PCS (Personal Communications Services), and UWB technology (Ultra-WideBand).

The user interface part 102 and controller 100 may be structurally attached and electrically connected. The user interface part 102 may also be a structurally completely separate part that may be connected to the controller 100 through a data network, for instance. The user interface part 102 may then connect by program to the controller 100 over a data network, such as the Internet. A smart phone or computer, for example, may act as a concrete user interface part 102 to connect by program to the controller 100 by means of a user id and password, for instance. The commands intended for the controller 100 can then be input anywhere. Rescue personnel, the police, the army, or a corresponding user, who are the initiators or authorizers of the command and may also be system administrators, may manage the entire system in a centralized manner from a control room. Instead of or in addition to the rescue department, police, army, or corresponding user, the actual system administrator may be a building maintenance company, security company, or the like. Thus, the system can be used and/or maintained by the authorities and/or a private company.

The controller 100 of the ventilation control system controls the ventilation systems of several buildings in such a manner that controller 100 of the ventilation control system transmits a command to shut down the ventilation system via the channel 104 in predetermined danger situations. The controller 100 of the ventilation control system transmits a command to one or more ventilation system controllers 106 to 110 that switch off the ventilation system in the building. There may be one or more ventilation system controllers 106 to 110 in a building. The ventilation system controller 106 to 110 in the building receives said command and switches ventilation off.

In an embodiment, the command to shut down ventilation can be broadcasted to all buildings. The transmission may even be nationwide. The transmission may use broadcast transmitters, RDS (Radio Data System) data, a broadcast message in a mobile telephone network, or some other corresponding message in other systems. All ventilation controllers receiving the command then shut down the ventilation. The command may contain coordinates of the accident site and information on the extent of the guard area and direction of wind, for instance. All existing ventilation systems receive the command and independently interpret on the basis of the coordinates of the accident site and their own location, whether the command applies to the ventilation system in question. If the command applies to the ventilation system in question, the controller shuts down the ventilation. This is an economically advantageous way of implementing a HAVA system. The solution also works in situations, where the general mobile telephone network is inoperative. The ventilation system controllers may also be connected via a mobile telephone network, in which case acknowledgements can be transmitted on received commands.

In an embodiment, the command contains identification information on which buildings are to shut down their ventilation. The ventilation system controllers 106 to 110 that correspond to the identification information and receive the command then shut down their ventilation, while the other ventilation systems continue as usual.

In an embodiment, the controller 100 of the ventilation control system only directs the command to shut down the ventilation system to certain ventilation system controllers 106 to 110. The ventilation controllers 106 to 110 that receive the command then shut down ventilation, while the other ventilation systems continue ventilation as usual. Directing the command is possible through a suitable data network, such as the Internet, for instance.

When the ventilation system of a building is off, a ventilation machine 112 to 116 may be closed to prevent moving air from outdoors to indoors. The ventilation machine 112, ventilation system controller 106, and ventilation duct 118 form together the ventilation system in the building. The same applies to other reference numbers 114 to 116, 106 to 110, 120 to 122. Alternatively or in addition to this, the ventilation duct 118 to 122 may be closed. When the ventilation machine 112 to 116 is closed, the ventilation machine does not move air indoors from outdoors. The ventilation duct 118 to 122 can be closed by a valve, for instance, so that air cannot move indoors from outdoors. Thus, the switching off of ventilation can be performed either by stopping the ventilation machine or by closing the ventilation duct, and in both cases the ventilation machine then cannot move air indoors from outdoors. The efficient way is to both stop the operation of the ventilation machine and close the ventilation duct.

At least one ventilation system controller 106 to 110 transmits a feedback to the controller 100 of the ventilation control system that receives said feedback. The feedback is a response to the command to close the ventilation system. The feedback may contain information on that ventilation has been shut down as ordered. The feedback may also comprise information on which building or ventilation machine it has been transmitted from. The information may be address information on a physical location or data traffic, or individual identification information on the building and/or ventilation machine.

The controller 100 of the ventilation control system may transmit a command to switch on the ventilation system after the switch-off command. This may take place after it has been verified that the dangerous situation is over. The ventilation controller 106 to 110 may then switch on ventilation in response to the received command. After this, at least one ventilation controller 106 to 110 may transmit a feedback to the controller 100 of the ventilation control system that receives said feedback. The feedback is a response to the command to switch on the ventilation system. As in the case of switching off, the feedback may contain information on that ventilation has been shut down as ordered. The feedback may also comprise information on which building or ventilation machine it has been transmitted from. The information may be address information on a physical location or data traffic, or individual identification information on the building and/or ventilation machine. The people in each building may transmit information to the rescue department or some other corresponding system user on the status of the building and/or the people therein through the user interface 102. The information may be transmitted in symbols, such as alphanumerically, graphically, as video and/or speech.

Let us now examine the controller 100 of the ventilation control system by means of Figure 2A. The controller 100 of the ventilation control system comprises at least one processor 200 and at least one memory 202 that contains a computer program code. Said at least one memory 202 together with said at least one processor 200 and the computer program code causes the controller 100 of the ventilation control system to transmit a command for switching off and/or switching on the ventilation system and to receive a feedback for said one or more commands.

In an embodiment, the controller 100 of the ventilation control system may receive information on one or more dangerous substances releasing into the air and/or present in the air for the purpose of transmitting a command to shut down the ventilation system. The information may define an accident type, for instance. Information on dangerous substances in the air may be transmitted from outdoor sensors, the Internet, as a communication from the authorities over wire or wirelessly, or the like.

In an embodiment, the controller 100 of the ventilation control system may receive information on the amount, quality, distance, or some other corresponding property of the one or more dangerous substances present in the air. This information may be transmitted from outdoor sensors, the Internet, as a communication from the authorities over wire or wirelessly, or the like.

In an embodiment, the controller 100 of the ventilation control system may receive information on the weather. The weather information may be transmitted from outdoor sensors, the Internet, as a communication from the authorities over wire or wirelessly, or the like. The weather information may contain information on the direction and velocity of the wind, cloud cover, rain, or the like. In addition, the weather information may contain a forecast on the direction and velocity of the wind at least at one future time instant.

In an embodiment, the controller 100 of the ventilation control system may receive user directions from the user interface 102 for the purpose of transmitting a shut-down command to the ventilation system.

In an embodiment, the addresses and/or map coordinates of the buildings are stored in the memory 202 of the ventilation control system. The control program may control switches on the basis of the coordinates and weather information (wind direction and velocity, or the like) of the location of an accident.

Let us now examine the ventilation system controller 106 to 110 by means of Figure 2B. The ventilation system controller 106 to 110 may comprise at least one processor 250 and at least one memory 252 that contains a computer program code. Said at least one memory 252 together with said at least one processor 250 and the computer program code causes the ventilation system controller 106 to 110 to receive a command for switching off and possibly switching on the ventilation system, to close and possibly also to open the ventilation system and to transmit a feedback in response to said one or more commands.

The ventilation system controller 106 to 110 of the building receives a command to switch off the ventilation system from the controller 100 of the ventilation control system. On the basis of the command, the ventilation system controller 106 to 110 switches the ventilation off. In addition, the ventilation system controller 106 to 110 may transmit a feedback concerning the switching off of the ventilation system.

In an embodiment, the ventilation system controller 106 to 110 may receive a command to switch the ventilation system on. This takes place when the controller 100 of the ventilation control system decides that all is clear. The ventilation system controller 106 to 110 may then switch on ventilation in response to the received command, and transmit a feedback concerning the switching on of the ventilation system.

In an embodiment, the ventilation system controller 106 to 110 comprises at least one processor and at least one memory that contains a computer program code (as shown in Figure 2). Said at least one memory together with said at least one processor and the computer program code causes the ventilation system to receive a command for switching off and/or switching on the ventilation system and to transmit a feedback concerning the switching off and/or on of the ventilation system.

In an embodiment, the address and/or map coordinates of each building are stored in the memory of the ventilation system, and this information can be used in the feedback to identify it.

In an embodiment, the ventilation system in the building comprises an enclosed contactor that is controlled through a channel 104 and installed in the machine room of the ventilation system. In an embodiment, the channel is a channel of a UMTS or GSM radio system. The ventilation system controller 106 to 110 may then be controlled by text messages, for instance, that the control system of the controller 100 of the ventilation control program generates automatically on the basis of available data related to the air and weather. From the contactor that comprises one or more relay switches, it is possible to transmit diagnostic data on the switches as a feedback that may also comprise information on the state of the ventilation (on/off), the state of electric supply (on/off), air temperature, and other sensor data. If electricity is off, it may mean that it has been switched off to stop ventilation, or that there is a power failure. Other sensor data may contain information on the quality of air. Air quality information may contain information on the concentration of dangerous substances in the air. Air quality information may contain information on the quality of air indoors and/or outdoors.

In an embodiment, the controller 100 of the ventilation control system may control the switches acting as the ventilation controllers 106 to 110 on the basis of the coordinates and weather information of the location of an accident, when the addresses and/or map coordinates of the buildings are stored in the database and information on at least one dangerous substance in the air and its behaviour is available. The state of the switches acting as the ventilation system controllers 106 to 110 can be updated into the database in the memory 202 of the ventilation control system controller 100 on the basis of received messages. This way, it is possible to control specifically the ventilation system controllers 106 to 110 that are the most essential in view of the at least one hazardous substance present in the air and the potential danger it causes.

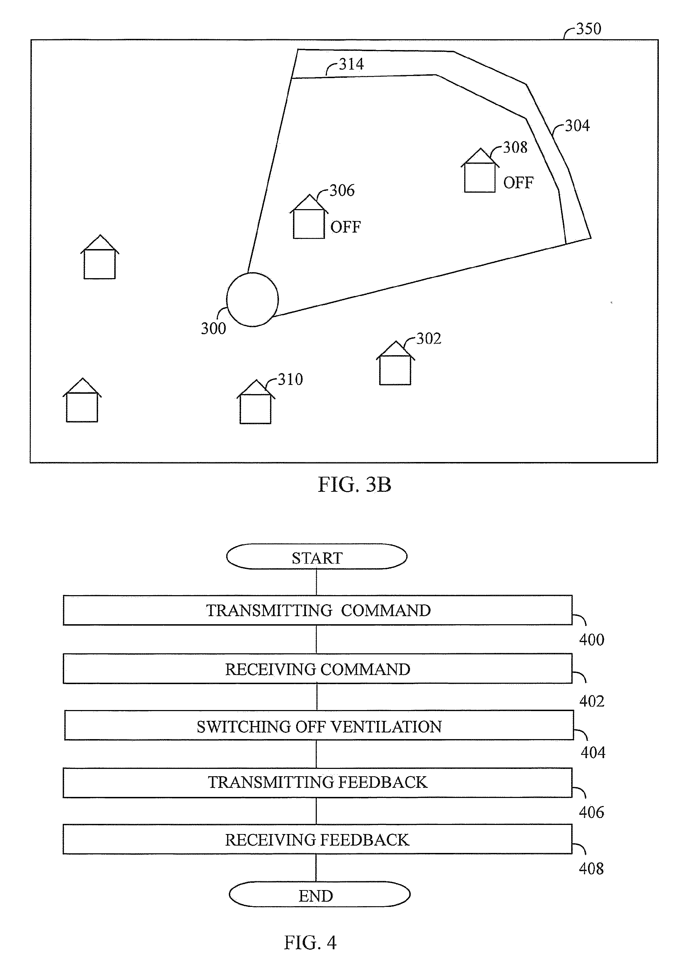

Figures 3A and 3B show examples of a map. On the map 350 of Figure 3A, at location 300, there is a fire that releases dangerous gases and/or particles. In the situation of Figure 3A, the dangerous substances have spread until the boundary 312. The ventilation control system in the building 302 that comprises a controller 100 receives information of a fire either through input by a person via the operating system 102 or on the basis of an automatic measurement. The ventilation control system 302 may position the location of the accident on the map on the basis of the received information. The computer program of the ventilation control system 302 determines automatically which buildings are in the danger zone.

To determine the buildings in the danger zone, the ventilation control system 302 may also obtain weather information that includes information on the direction and velocity of the wind according to measurements and/or a forecast of the direction and velocity of the wind at least at one future time instant. In addition, the ventilation control system 302 may have information on the time of the day, season of year, temperature and/or cloud cover, because this information may affect the spreading and spreading prediction of dangerous substances. This information may be retrieved or obtained from the Internet or some other information service, for example. Further, the ventilation control system 302 may have a map containing topographical data available to it, either stored in the memory or retrievable from the Internet, for instance. The data on the map can be updated continuously with the received measuring information.

The ventilation control system 302 comprises a computer program that is capable of determining the spreading area 304 of dangerous gases and/or particles in different weather conditions. A simulation based on spreading models can be used in evaluating the spreading of dangerous substances in the air. Topography and whether the one or more released substances are denser than air, equal to air density, or less dense than air may affect the spreading. If the released substance is denser than air, it will not travel as well with the air flows as a less dense substance. With the simulation, it is possible to determine the concentration of hazardous substances in the air as a function of position. The predicted spreading area 304 will then be the area, in which the concentration of hazardous substances exceeds an accepted limit. An accepted limit may be based on a highest allowed amount defined by the authorities. An accepted limit may be somewhat higher or lower than the highest allowed limit, but it typically cannot be a limit that is known to be dangerous or life-threatening to people and/or animals.

As can be seen in Figure 3A, two buildings 306, 308 are within the predicted spreading area. The ventilation control system 302 may automatically transmit a command to shut down ventilation in said buildings 306, 308, because the buildings 306, 308 are in a predetermined dangerous situation, i.e. one or more dangerous substances threaten to spread into the buildings 306, 308 in a concentration that exceeds the accepted limit. The ventilation in the building 310, for instance, need not be switched off, because it is not threatened by a predetermined dangerous situation, even though the fire is quite close. In general, a predetermined dangerous situation is in this patent application one in which the quality of the outdoor air of a building becomes poorer in such a manner that the concentration of one or more dangerous substances in the outdoor air is higher or equal to an accepted limit. The accepted limit is a predetermined limit or one determined by the rescue personnel and/or authorities according to the situation. The ventilation systems of the buildings 306, 308 transmit a feedback that acknowledges the receipt of the shut-down command. The ventilation control system 302 can then update the status of the ventilation of different buildings on the map and, this way, the rescue personnel obtain confirmation on the switching off of ventilation in the danger zone.

Figure 3B shows a situation, in which the dangerous substances have spread until the boundary 314. The ventilation in the buildings 306, 308 is remotely switched off (OFF), which has saved the people and/or animals in the buildings 306, 308. The fire at location 300 is also under the control of the fire-extinguishing personnel and will be extinguished soon. When the spreading of the dangerous substances ends and their concentrations in the air decrease below the accepted limit, the ventilation control system 302 can, on the basis of this information, automatically transmit a command to switch on the ventilation again in the buildings 306, 308.

In an embodiment, the ventilation control system 302 can be made to transmit the ventilation shut-down command to desired buildings by manual control. In such a case, the symbol of the building can be selected from the map and the operating system can be controlled to transmit a shut-down command to the selected one or more buildings. The symbol of the building can be selected for instance by touching the symbol of the building on the map, if a touch screen is used. For example, a double touch at the building may mean that a shut-down command is transmitted. It is also possible to move the cursor with a mouse or arrow button to the symbol of the building and to select the building by a click of the mouse or enter button and to transmit a shut-down command with the same or a following click.

In an embodiment, the ventilation system controller 106 to 110 independently decides on the basis of the coordinate information received with the command and its own location, whether the received command to shut down the ventilation causes action. The controller 106 to 110 may comprise one or more smart switches that may comprise combination and/or sequence circuits. The initial status of the combination circuits only depends on the input signals of the same time instant. The initial status of the sequence circuit depends on the statuses of the present and preceding input signals.

In the present solution, it is possible that the ventilation in different buildings is controlled from one or more locations (control room, building maintenance, control unit of the fire department). The present system may be Internet-based and/or radio system-based. A connection between the ventilation control system and ventilation system can be implemented through the Internet, for instance, if the mobile phone network does not work sufficiently well.

In an embodiment, the commands to shut down the ventilation can be transmitted consecutively in order. Then, commands are first transmitted to the ventilation systems closest to an accident site, since they are first in danger, and then to ventilation systems further away from the accident site.

In an embodiment, the ventilation system controllers may establish a direct connection between each other. This may be an ad-hoc data network. The ventilation systems of the buildings 306 to 301 may then establish an ad-hoc data network-type connection between each other to allow data transmission between the ventilation control system 302 with controller 100 and the ventilation systems of the buildings 306, 308 with controllers 106 to 110.

At least the ventilation system controllers 106 to 110 that the controller 100 of the ventilation control system has identified or indicated in the command can connect to the network. The establishment of the network is possible, if the ventilation system controllers comprise transceiver radios. In an embodiment, the ventilation system controllers 106 to 110 may comprise wireless network transceivers that are also capable of establishing an ad-hoc network between them. In an embodiment, the ventilation system controllers 106 to 110 may comprise WLAN transceivers, for example. This would also be a handy back-up, if the primarily used UMTS connection, for instance, does not work. An ad-hoc network may provide feedback to the ventilation system controller 100 on whether the establishment of the ad-hoc network was successful.

In an embodiment, the system comprises an audio alarm function, with which the persons inside the building are warned of danger. The audio alarm unit may then be connected to the ventilation system controller that switches on the audio alarm, when it receives a command to shut down ventilation. In an embodiment, the ventilation system controller 106 to 110 or the controller 100 of the ventilation control system may transmit text messages to pre-set numbers (people in the building) in an emergency. The message may contain information on the emergency and the necessary protective measures. The same system can also be used to send information on other dangers that are not necessarily related to ventilation (e.g. a dangerous person moving in the area, a dangerous animal moving in the area, a missing person being searched for in the area - observations requested) and so on.

The present solution prevents dangerous substances and combustion gases from spreading into buildings and provides additional time for a possible evacuation. The solution is reliable even in the night, when emergency announcements do not reach the citizens in a danger zone. The solution does not require that the rescue or maintenance personnel go to the danger zone to switch off ventilation in buildings. The solution also minimizes smoke damage and the like to buildings.

Figure 4 shows an example of a ventilation control method. In step 400, a command is transmitted from the ventilation control system 302 to close the ventilation system in predetermined danger situations. In step 402, the command is received by the ventilation system of at least one building 306, 308. In step 404, the ventilation is switched off in response to the received command. In step 406, said at least one ventilation system transmits a feedback to the ventilation control system 302. In step 408, the feedback in response to the transmitted command to switch off the ventilation system transmitted by said at least one ventilation system is received in the ventilation control system 302.

When the controller 100 of the ventilation control system comprises at least one processor and memory having a computer program, the computer program and the memory can, together with said at least one processor, cause the ventilation control system to execute the steps referred to in the method to transmit the command and receive the possible feedback. Correspondingly, when the ventilation system controller 106 to 110 comprises at least one processor and memory having a computer program, the computer program and the memory can, together with said at least one processor, cause the ventilation system to execute the steps referred to in the method to transmit a feedback.

The computer program may be placed on a computer program distribution means for the distribution thereof. The computer program distribution means is readable with a data processing device, and it may encode the computer program commands to control the operation of the measuring device.

The distribution means, in turn, may be a solution known per se for distributing a computer program, for instance a computer-readable medium, a program storage medium, a computer-readable memory, a computer-readable software distribution package, a computer-readable signal, a computer-readable telecommunication signal or a computer-readable compressed software package. The distribution means may be material, structural, and tangible.

Centralized control and feedback from the ventilation system of each building to the centralized control allow the authorities or the like to concentrate on the actual rescue task instead of checking the ventilation machine in each building separately either on site or by contacting the people in the building.

It will be apparent to a person skilled in the art that as technology advances, the basic idea of the invention may be implemented in many different ways. The invention and its embodiments are thus not restricted to the examples described above but may vary within the scope of the claims.

## Claims

1. A ventilation control system, **characterised in that** the ventilation control system (302), which is used by rescue personnel, the police, army, or the like, is adapted to control ventilation systems in several buildings (306, 308) in a centralized manner such that the ventilation control system (302) is adapted to
transmit a command to shut down the ventilation system in predetermined dangerous situations; and
receive a feedback transmitted by the ventilation system of at least one building (306, 308) in response to the transmitted command to shut down the ventilation system, the feedback containing information on which building or ventilation machine it has been sent from.

2. A system as claimed in claim 1, **characterised in that** the ventilation control system (302) is adapted to transmit a command to switch on the ventilation system in an all clear situation; and
to receive a feedback transmitted by at least one ventilation system in response to the transmitted command to switch on the ventilation system.

3. A system as claimed in claim 1 or 2, **characterised in that** the ventilation control system (302) comprises at least one processor (200); and
at least one memory (202) containing a computer program code, said at least one memory (202) together with said at least one processor (200) and the computer program code being adapted to cause the ventilation control system (302) to transmit a command for switching off and/or switching on the ventilation system and to receive a feedback for said one or more commands.

4. A system as claimed in claim 1, **characterised in that** the ventilation control system (302) is adapted to receive information on one or more dangerous substances releasing into the air and/or present in the air for the purpose of transmitting the command to shut down the ventilation system.

5. A system as claimed in claim 4, **characterised in that** the ventilation control system (302) is adapted to automatically transmit the command related to shutting down the ventilation system on the basis of the amount, quality, or distance of the one or more dangerous substances releasing into the air and/or present in the air, or on the basis of weather information.

6. A system as claimed in claim 1, **characterised in that** the ventilation control system (302) is adapted to receive a command input by a user to transmit a command to shut down the ventilation system.

7. A system as claimed in claim 1, **characterised in that** the ventilation systems of the buildings (306 to 301) are adapted to establish between them an ad-hoc data network-type connection to allow data transmission between the ventilation control system (302) and the ventilation systems of the buildings (306, 308).

8. A ventilation system in a building, **characterised in that** the ventilation system of the building (306, 308) is adapted to
receive in a centralized manner a command transmitted from a ventilation control system (302), which is used by rescue personnel, the police, or the like, to several different buildings to shut down the ventilation system,
shut down ventilation in response to the received command and to transmit a feedback concerning the shutting down of the ventilation system and containing information on which building or ventilation machine it has been sent from.

9. A ventilation system as claimed in claim 8, **characterised in that** the ventilation system is adapted to
receive a command to switch on the ventilation system,
switch on ventilation in response to the received command, and transmit a feedback concerning the switching on of the ventilation system.

10. A ventilation system as claimed in claim 8 or 9, **characterised in that** the ventilation system comprises at least one processor; and
at least one memory comprising a computer program code,
said at least one memory together with said at least one processor and the computer program code being adapted to cause the ventilation system to receive a command for switching off and/or switching on the ventilation system and to transmit a feedback concerning the switching off and/or on of the ventilation system.

11. A ventilation control system, **characterised by** controlling ventilation systems of several buildings (306, 308) in a centralized manner by
transmitting (400) from the ventilation control system (302), which is used by rescue personnel, the police, army, or the like, a command to shut down the ventilation system in several buildings in predetermined dangerous situations,
receiving (402) the command in the ventilation system of at least one building (306, 308),
switching off (404) ventilation in response to the received command, transmitting (406) to the ventilation control system (302) from said at least one ventilation system a feedback in response to the transmitted command to shut down the ventilation system, the feedback containing information on which building or ventilation machine it has been sent from, and
receiving (408) in the ventilation control system (302) the feedback transmitted by at least one ventilation system to ensure that ventilation has been switched off.

12. A ventilation control system as claimed in claim 11, **characterised by**
transmitting from the ventilation control system (302) a command to switch on the ventilation system after the switch-off command in an all clear situation,
switching on ventilation in response to the received command, transmitting from said at least one ventilation system a feedback to the ventilation control system (302), and
receiving in the ventilation control system (302) the feedback transmitted by at least one ventilation system in response to the transmitted command to switch on the ventilation system.
